# EUROPEAN PATENT APPLICATION

(11) **EP 3 940 862 A1**
(43) Date of publication of application: **19.01.2022**
(21) Application number: 21163837.4
(22) Date of filing: 19.03.2021
(51) Int. Cl.: H01M 10/42

(54) **INTEGRATED DEVICE FOR VOLTAGE ACQUISITION AND BATTERY MONITORING**

(30) Priority: 13.07.2020 CN 202021366682 U
(71) Applicant: Dongguan Guixiang Insulation Material Co., Ltd, Dongguan, Guangdong (CN)
(72) Inventor: HE, Huaming, Ji 'an, Jiangxi (CN); DAI, Zhite, Changsha, Hunan (CN)
(74) Representative: Ipey

(57) **Abstract**

The present application discloses an integrated device for voltage acquisition and battery monitoring, which includes a bracket, a BMU PCBA board, an FPC, a plurality of acquisition chips and a plurality of busbar units. By arranging both the BMU PCBA board and the FPC on the bracket, the FPC is fixed with and conductively connected to the BMU PCBA board, the plurality of acquisition chips on the bracket are conductively connected to the FPC, and the plurality of busbar units on the bracket are all conductively connected to the corresponding acquisition chip, so that the BMU PCBA board and the voltage acquisition device are directly integrated on the same bracket and conductively connected to each other without a wire harness with 20PIN wire end connectors at both terminals, thereby greatly simplifying the entire integrated device, reducing the installation space of the entire device, shortening the assembly time and reducing the assembly cost.

## Description

### BACKGROUND

### Field of Invention

The present application relates to the technical field of battery module, in particular, to an integrated device for voltage acquisition and battery monitoring.

### Background of the Invention

In the prior art, the circuit of new energy power battery has a structure of connecting the external BMU module to the external battery module, and then connecting the external BMU module to the voltage acquisition device by a wire harness with 20PIN terminal connectors at both terminals. Such an integrated device has a large design volume, requires a very large installation space, and consumes a lot of materials, resulting in long assembly time and high assembly cost.

### SUMMARY

In view of this, in order to solve the drawbacks in the prior art, the main objective of the present application is to provide an integrated device for voltage acquisition and battery monitoring, which may effectively solve the problems of large installation space, long assembly time, and high assembly cost in existing integrated devices for voltage acquisition and battery monitoring.

To achieve the above objective, the present application adopts the following technical solutions:

An integrated device for voltage acquisition and battery monitoring includes a bracket, a BMU PCBA board, an FPC, a plurality of acquisition chips and a plurality of busbar units, wherein both the BMU PCBA board and the FPC are arranged on the bracket, and the FPC is fixed with and conductively connected to the BMU PCBA board; the plurality of collection chips are all conductively connected to the FPC; the plurality of busbar units are all arranged on the bracket and are conductively connected to the corresponding acquisition chips.

As a preferred solution, the bracket is provided with a CCS total negative electrode and a CCS total positive electrode, and the CCS total negative electrode and the CCS total positive electrode are respectively conductively connected to the FPC through a connecting chip.

As a preferred solution, the bracket has a plastic plate-shaped structure.

As a preferred solution, the BMU PCBA board has a 4PIN daisy chain communication interface receptacle connector for input and output.

As a preferred solution, the BMU PCBA board is further provided with a master control IC, a balanced circuit element, an isolation circuit, a 2PIN heating component connector and a soldering gold finger connected to the FPC, and the balanced circuit element, the isolation circuit, the 2PIN heating component connector and the soldering gold finger are all conductively connected to the master control IC.

As a preferred solution, a part of the acquisition chips is provided with a thermistor, and the thermistor is conductively connected to the corresponding acquisition chips and the busbar unit.

Compared with the prior art, the present application has obvious advantages and beneficial effects. Specifically, it can be known from the above technical solutions that: By arranging both the BMU PCBA board and the FPC on the bracket, the FPC is fixed with and conductively connected to the BMU PCBA board, the plurality of acquisition chips on the bracket are conductively connected to the FPC, and the plurality of busbar units on the bracket are all conductively connected to the corresponding acquisition chip, so that the BMU PCBA board and the voltage acquisition device are directly integrated on the same bracket and conductively connected to each other without using a wire harness with 20PIN wire end connectors at both terminals, thereby greatly simplifying the entire integrated device, reducing the installation space of the entire device, shortening the assembly time and reducing the assembly cost.

### BRIEF DESCRIPTION OF THE DRAWINGS

Fig. 1 is a front view of assembly of a preferred embodiment of the present application;
Fig. 2 is a front view of assembling a BMU PCBA board and an FPC of a preferred embodiment of the present application;
Fig. 3 is a front view of the BMU PCBA board of a preferred embodiment of the present application.

References in the Figures:

| | | | |
|---|---|---|---|
| 10. | Bracket | 11. | CCS total negative electrode |
| 12. | CCS total positive electrode | 20. | BMU PCBA board |
| 21. | Master control IC | 22. | Balanced circuit element |
| 23. | Isolation circuit | 24. | 2PIN heating component connector |
| 25. | Welding gold finger | 26. | 4PIN daisy chain communication interface receptacle connector |
| 30. | FPC | 31. | Body |
| 32. | Conduction pin | 40. | Acquisition chip |
| 50. | Busbar unit | 60. | Thermistor.. |

### DETAILED DESCRIPTION OF THE EMBODYMENTS

In order to explain the structural features and effects of the present application more clearly, the present application will be described in detail below with reference to the drawings and specific embodiments.

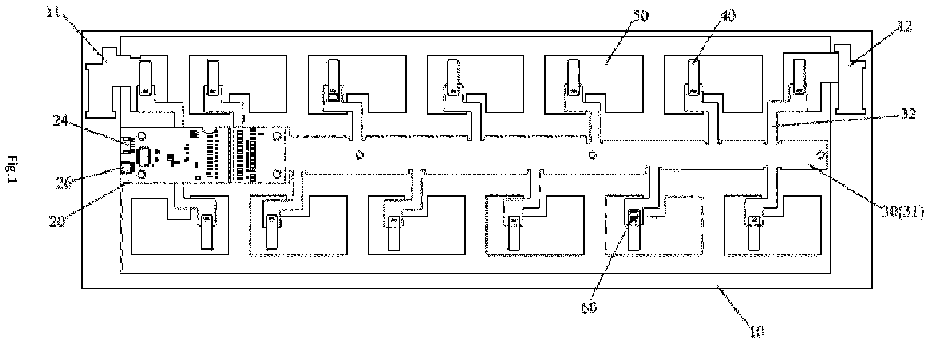

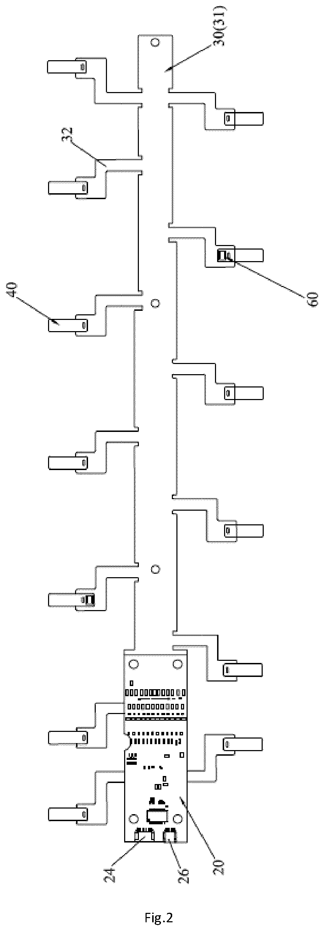

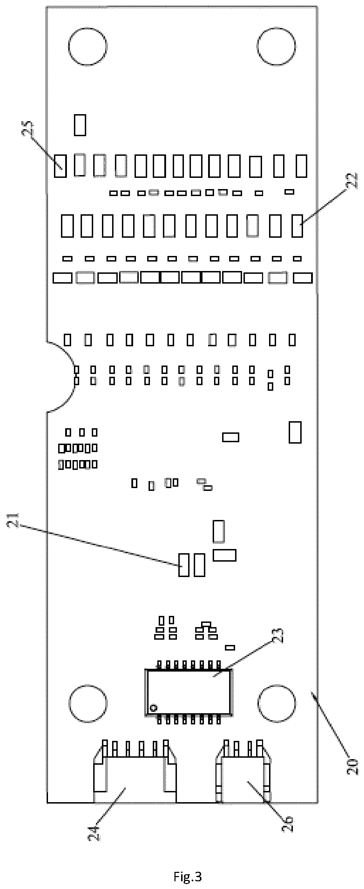

With reference to Figs. 1 to 3, a specific structure of a preferred embodiment of the present application is shown, which includes a bracket 10, a BMU PCBA board 20, an FPC 30, a plurality of acquisition chips 40, and a plurality of busbar units 50.

The bracket 10 has a plastic plate-shaped structure, and the bracket 10 is formed by integral injection molding. The bracket 10 is provided with a CCS total negative electrode 11 and a CCS total positive electrode 12, the CCS total negative electrode 11 and CCS total positive electrode 12 are the two connecting terminals of the device, and the CCS total negative electrode 11 and the CCS total positive electrode 12 are respectively conductively connected to the FPC 30 through connecting chips.

The BMU PCBA board 20 is arranged on the bracket 10, and the BMU PCBA board 20 is further provided with a master control IC 21, a balanced circuit element 22, an isolation circuit 23, a 2PIN NTC component connector 24 and a soldering gold finger 25 connected to the FPC 30; the balanced circuit element 22, the isolation circuit 23, the 2PIN heating component connector 24 and the soldering gold finger 25 are all conductively connected to the master control IC 21; the balanced circuit element 22, the isolation circuit 23, the 2PIN heating component connector 24 and the soldering gold finger 25 are all controlled by the master control IC 21. The BMU PCBA board 20 has a 4PIN daisy chain communication interface receptacle connector 26 for input and output.

The FPC 30 is also arranged on the bracket 10, and the FPC 30 includes a body 31 and a plurality of conduction pins 32; the plurality of pins are arranged side by side on both sides of the body 31, and the pins are integrally formed with the body 31; the FPC 30 is fixed with and conductively connected to the BMU PCBA board 20, and one terminal of the body 31 is conductively connected to the welding gold finger 25 on the BMU PCBA board 20.

The plurality of acquisition chips 40 are all conductively connected to the above FPC 30. In the present embodiment, the number of the acquisition chips 40 is 13, and the 13 acquisition chips 40 are arranged on an upper surface of the bracket 10 and close to the edges of the both sides of the bracket 10. Some acquisition chips 40 are provided with a thermistor 60 respectively. In the present embodiment, two acquisition chips 40 are provided with the thermistors 60, and the thermistors 60 are conductively connected to the corresponding acquisition chips 40 and the busbar unit 50 respectively.

The plurality of busbar units 50 are all arranged on the bracket 10 and are conductively connected to the corresponding acquisition chips 40. In the present embodiment, the number of the busbar units 50 is 11, and the 11 busbar units 50 are arranged on the upper surface of the bracket 10 and are close to the edges on both sides of the bracket 10; the 11 busbar units 50 are distributed in 11 of the 13 acquisition chips 40, and the remaining two of the 13 acquisition chips 40 are located at the CCS total negative electrode 11 and the CCS total positive electrode 12 respectively.

The key points of the design of the present application are:

By arranging both the BMU PCBA board and the FPC on the bracket, the FPC is fixed with and conductively connected to the BMU PCBA board, the plurality of acquisition chips on the bracket are conductively connected to the FPC, and the plurality of busbar units on the bracket are all conductively connected to the corresponding acquisition chip, so that the BMU PCBA board and the voltage acquisition device are directly integrated on the same bracket and conductively connected to each other without a wire harness with 20PIN wire end connectors at both terminals, thereby greatly simplifying the entire integrated device, reducing the installation space of the entire device, shortening the assembly time and reducing the assembly cost.

The above are only preferred embodiments of the present application, and do not limit the technical scope of the utility model in any way; therefore, any minor modifications, equivalent changes and modifications made to the above embodiments based on the technical essence of the present application still fall within the scope of the technical solution of the present application.

## Claims

1. An integrated device for voltage acquisition and battery monitoring, comprising a bracket, a BMU PCBA board, an FPC, a plurality of acquisition chips and a plurality of busbar units, wherein both the BMU PCBA board and the FPC are arranged on the bracket, and the FPC is fixed with and conductively connected to the BMU PCBA board; the plurality of collection chips are all conductively connected to the FPC; the plurality of busbar units are all arranged on the bracket and are conductively connected to the corresponding acquisition chips.

2. The integrated device for voltage acquisition and battery monitoring according to claim 1, wherein the bracket is provided with a CCS total negative electrode and a CCS total positive electrode, and the CCS total negative electrode and the CCS total positive electrode are respectively conductively connected to the FPC through a connecting chip.

3. The integrated device for voltage acquisition and battery monitoring according to claim 1, wherein the bracket has a plastic plate-shaped structure.

4. The integrated device for voltage acquisition and battery monitoring according to claim 1, wherein the BMU PCBA board has a 4PIN daisy chain communication interface receptacle connector for input and output.

5. The integrated device for voltage acquisition and battery monitoring according to claim 1, wherein the BMU PCBA board is further provided with a master control IC, a balanced circuit element, an isolation circuit, a 2PIN heating component connector and a soldering gold finger connected to the FPC, and the balanced circuit element, the isolation circuit, the 2PIN heating component connector and the soldering gold finger are all conductively connected to the master control IC.

6. The integrated device for voltage acquisition and battery monitoring according to claim 1, wherein a part of the acquisition chips is provided with a thermistor, and the thermistor is conductively connected to the corresponding acquisition chips and the busbar unit..
